# EUROPEAN PATENT SPECIFICATION

(11) **EP 0 472 784 B1**
(45) Date of publication and mention of the grant of the patent: **07.06.1995**
(21) Application number: 90202968.5
(22) Date of filing: 08.11.1990
(51) Int. Cl.: F16H 35/10, E06B 9/307, E06B 9/78

(54) **Mechanism for motion conversion**
Bewegungsumwandlungsmechanismus
Mécanisme de conversion de mouvements

(30) Priority: 01.08.1990 NL 9001738
(43) Date of publication of application: 04.03.1992
(73) Proprietor: ALLPAC INTERNATIONAL B.V., NL-4940 AC Raamsdonksveer (NL)
(72) Inventor: Meyer, Pieter Nicolaas, NL-4171 BM Herwijnen (NL)
(74) Representative: Keijser, Johannes Maurits L.F., Mr.

(56) References cited:
- EP-A- 0 113 576
- EP-A- 0 211 660
- WO-A-88/02079
- US-A- 2 713 799
- US-A- 4 122 885
- US-A- 4 836 345

## Description

The invention relates to a mechanism for the transmission of a rotary motion of the ingoing shaft of a reduction gearing to a rotary motion of the outgoing shaft of said gearing, the axis of which is situated at right angles to the axis of the ingoing shaft, the ingoing shaft carrying a screw thread winding, and a pinion of the reduction gearing cooperating with this winding being coaxially supported on the outgoing shaft and capable of transmitting its rotary motion thereto, all elements of the mechanism being accommodated in a housing provided with two parallel and elastic walls between which the pinion is supported, and the ends of the ingoing shaft of the mechanism being supported in bearings, which form part of connecting walls of the housing, the mechanism incorporating a rattling rotary slip coupling between the ingoing and outgoing shafts.

Such a mechanism is known from EP-A-113576.

In short, this prior art motion conversion mechanism comprises a reduction gearing and a rattling rotary slip coupling. The slip coupling, as will be clear, serves to absorb overcharging, particularly due to the fact that force continued to be exerted despite the fact that no further possibility of movement of the outgoing shaft is possible. It is the very reduction gearing which is the cause of the force exerted by the user being exerted to a magnified degree in the interior of the mechanism. Without such slip coupling the mechanism could be blocked, and damage could even occur in the elements from which the mechanism is constructed.

In the state of the art, the rattling effect is performed between the worm gear and the pinion of the reduction gearing. This is allowed, in case of overcharging, by the presence of a slit in each of the side walls of the housing. The disadvantage of this is, that all rattling will imply wear and tear of the worm wheel and the pinion.

The prime object of the invention is to obviate this disadvantage. A further object, however, is to provide for a quite specific solution which results in extreme simplicity and very low manufacturing cost.

Taking the same state of the art as discussed above, these objects can be realized in two different ways.

The characterizing parts of independent claims 1 and 2, to which reference is made, define these two structural solutions.

Thus, in both solutions, one teeth ring forms integral part of the pinion and the other teeth ring of the rattling rotary slip coupling is formed integral with the outgoing shaft.

According to claim 1 relative axial movement of the pinion and the outgoing shaft is allowed for by elasticity of the side walls of the housing. According to claim 2 it is allowed for by the presence of some axial play which, otherwise, is taken up by an elastically loaded element fitted between the pinion and one housing wall.

The mechanism of the invention is advantageously applied to Venetian blinds.

US-A-4 122 885 discloses a motion transmission mechanism showing a reduction gearing and a rotary rattling slip coupling. In this case the slip coupling is entirely separate from the reduction gearing, it being arranged between an ingoing shaft of the mechanism as a whole and the ingoing shaft proper of the reduction gearing. In contrast thereto, the rotary slip coupling of the invention is integrated into the gearing mechanism, because one teethed ring is made integral with the pinion.

The mechanism according to the invention will be explained in greater detail with reference to the drawing, which shows an embodiment of the mechanism on an enlarged scale.

Fig. 1 is a perspective view of said-mechanism.

Fig. 2 shows an exploded view of the mechanism.

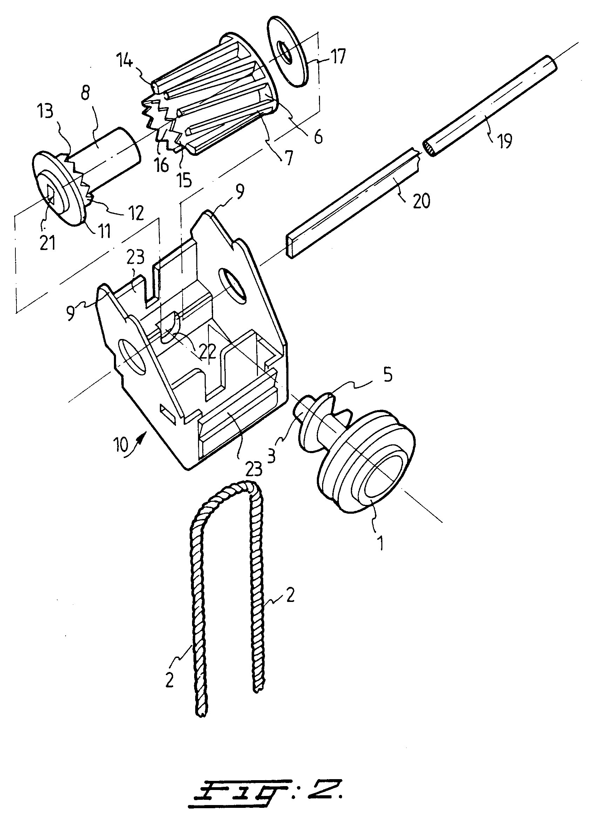

The mechanism is designed with a roller 1 whose outer periphery mates with a pulling element 2, which is generally in the form of a cord or chain. The roller 1 is fixed on, or is integral with, an ingoing shaft 3 (see Fig. 2) of a reduction gearing 4. This gearing is formed by a screw thread winding 5 on the ingoing shaft 3, mating with a cylindrical pinion 6 lying at right angles thereto. Said pinion is provided on its outside with helical teeth 7 which are complementary to the screw thread winding 5 on the shaft 3. The pinion 6 is supported so that it can rotate freely on a hollow shaft 8, which also forms the outgoing shaft of the reduction gearing 4. The hollow or outgoing shaft 8 is supported at both ends in two parallel walls 9 forming part of a housing 10. The shaft 8 is provided with a flange 11 and a ring 12 with teeth 13 all the way round. At its flat front side 14 facing left, the pinion 6 is also provided with a ring 15 which is concentric with and lies next to the ring 12 of the outgoing shaft 8. This ring 15 is also provided with teeth 16 which are complementary to the teeth 13 of the ring 12. The pinion 6 at its flat side situated opposite lies at a short distance from the adjacent wall 9.

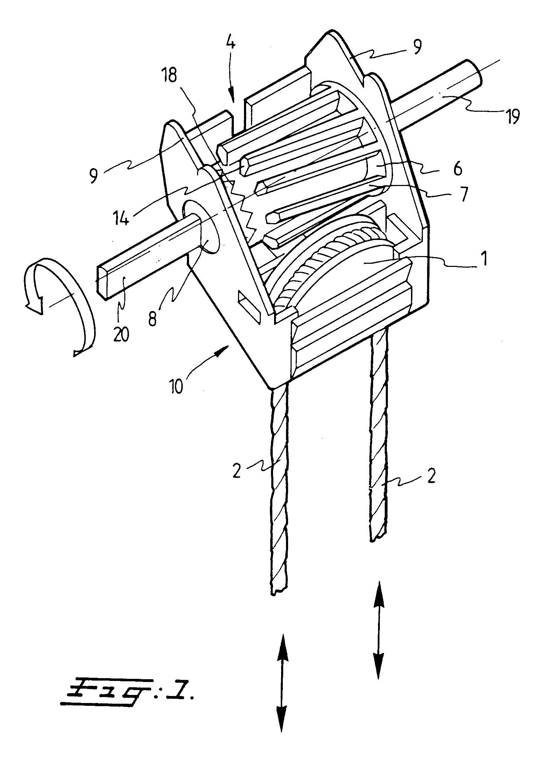

This means that there is some play present and that the pinion 6 can slide a little in the axial direction along the outgoing shaft 8. An elastically loaded element 17, by means of which the pinion 6 is pressed to the left (in Fig. 1) is placed between the pinion 6 and the right wall 9 shown in Fig. 1. This causes the complementary teeth 13, 16 to mesh. These teeth are designed in such a way that a rattling slip coupling 18 is thereby formed. This makes it possible, when a predetermined forces couple between the pinion 6, on the one hand, and the outgoing shaft, on the other, is exceeded, for the teeth 13, 16 to slide past each other emitting an acoustic signal. The axial movement of the pinion 6 of necessity occurring in the process is then absorbed by the elastically loaded element 17.

It is pointed out that the parallel walls 9 of the housing 10 can also be so flexible that the play in the pinion 6 mentioned above is superfluous, as is the elastically loaded element 17. During the rattling of the slip coupling 18 the walls 9 always bend outwards.

Figures 1 and 2 also show the shaft 19 to be adjusted, which at its end is provided with a flattened part or similar unround part 20. The hollow outgoing shaft 8 in its left part shown in Figures 1 and 2 is also provided internally with a complementary flattened part or unround part 21 for bringing about the coupling between the shaft 19 and the mechanism described thus far. Broadly speaking, this mechanism serves to convert a linear motion of a first element, in this case the pulling element 2, into a rotary motion of a second element, in this case the shaft 19, and the shaft 3, for that matter. Such a mechanism is used, for example, in a Venetian blind where the angular position of the slats must be adapted to the wishes of the user when the blind is pulled down. The mechanism described above is used for tilting of the slats, and the angular position of the shaft 19 is then the determining factor for the angular position of the slats.

In the tilting mechanisms used hitherto it has to be ensured that when the outermost positions of the slats are reached no blocking or jamming of the mechanism occurs through the user continuing to move the pulling element for too long. In the case of motorized control, it is also necessary to be able to switch off the motor in time. All this is avoided in the mechanism according to the invention through the use of a rattling slip coupling 18 which goes into action as soon as a further turning of the shaft 19 becomes impossible. The mechanism therefore cannot be overloaded or blocked, and a motorized drive can be used without risk.

With reference to Fig. 2, it is also pointed out that the ends of the ingoing shaft 3 of the mechanism are supported in bearings 22 which form part of connecting walls 23 of the housing 10. The whole mechanism can be made of a suitable plastic, so that no corrosion can occur, and maintenance is unnecessary.

## Claims

1. Mechanism for the transmission of a rotary motion of the ingoing shaft (3) of a reduction gearing (4) to a rotary motion of the outgoing shaft (8) of said gearing, the axis of which is situated at right angles to the axis of the ingoing shaft (3), the ingoing shaft carrying a screw thread winding (5), and a pinion (6) of the reduction gearing cooperating with this winding being coaxially supported on the outgoing shaft (8) and capable of transmitting its rotary motion thereto, all elements of the mechanism being accommodated in a housing (10) provided with two parallel and elastic walls (9) between which the pinion (6) is supported, and the ends of the ingoing shaft (3) of the mechanism being supported in bearings (22), which form part of connecting walls (23) of the housing (10), the mechanism incorporating a rattling rotary slip coupling (18) between the ingoing (3) and outgoing (8) shafts, **characterized in that** the rattling rotary slip coupling (18) comprises a ring (15) provided with teeth (16) and forming integral part of the pinion (16) and a ring provided with complementary teeth (13) and formed integral with the outgoing shaft (8) of the reduction gearing (4), during rattling of the slip coupling (18) the elastic walls (9) of the housing bending outwardly in order to allow for a relative axial movement of the pinion and outgoing shaft, respectively, and that further a mechanism is provided for the conversion of a linear motion of a flexible pulling member (2) such as a chain or cord into a rotary motion of the ingoing shaft (3), said pulling member (2) mating with the outer periphery of a roller (1) connected to the ingoing shaft (3).

2. Mechanism for the transmission of a rotary motion of the ingoing shaft (3) of a reduction gearing (4) to a rotary motion of the outgoing shaft (8) of said gearing, the axis of which is situated at right angles to the axis of the ingoing shaft (3), the ingoing shaft carrying a screw thread winding (5), and a pinion (6) of the reduction gearing cooperating with this winding being coaxially supported on the outgoing shaft (8) and capable of transmitting its rotary motion thereto, all elements of the mechanism being accommodated in a housing (10) provided with two parallel and elastic walls (9) between which the pinion (6) is supported, and the ends of the ingoing shaft (3) of the mechanism being supported in bearings (22), which form part of connecting walls (23) of the housing (10), the mechanism incorporating a rattling rotary slip coupling (18) between the ingoing (3) and outgoing (8) shafts, **characterized in that** the rattling rotary slip coupling (18) comprises a ring (15) provided with teeth (16) and forming integral part of the pinion (16) and a ring provided with complementary teeth (13) and formed integral with the outgoing shaft (8) of the reduction gearing (4), and in that between the parallel walls (9) of the housing there is some axial play present for the pinion (6) to move on the outgoing shaft (8), in that an elastically loaded element (17) is fitted on the hollow shaft (8) to take up said play, and in that further a mechanism is provided for the conversion of a linear motion of a flexible pulling member (2) such as a chain or cord into a rotary motion of the ingoing shaft (3), said pulling member (2) mating with the outer periphery of a roller (1) connected to the ingoing shaft (3).

3. Mechanism according to claims 1 or 2, applied to a Venetian blind.

## Patentansprüche

1. Mechanismus zur Übertragung einer Rotationsbewegung einer Eingangswelle (3) eines Untersetzungsgetriebes (4) in eine Rotationsbewegung einer Ausgangswelle (8) des Getriebes, wobei die Achse von dieser im rechten Winkel zur Achse der Eingangswelle (3) angeordnet ist, die Eingangswelle eine Schraubengewindewindung (5) trägt, ein Ritzel (6) des Untersetzungsgetriebes mit dieser Windung, die koaxial von der Ausgangswelle (8) gehalten wird und imstande ist, darauf ihre Rotationsbewegung zu übertragen, zusammenwirkt, alle Elemente des Mechanismus in einem Gehäuse (10) untergebracht sind, das mit zwei parallelen und elastischen Wänden (9), zwischen denen das Ritzel (6) gehalten wird, versehen ist und die Enden der Eingangswelle (3) des Mechanismus in Lagern (22) gehalten werden, die einen Teil der Verbindungswände (23) des Gehäuses (10) bilden, und der Mechanismus zwischen der Eingangswelle (3) und Ausgangswelle (8) eine Ratterrotationsrutschkupplung (18) enthält, dadurch gekennzeichnet, daß die Ratterrotationsrutschkupplung (18) einen Ring (15), der mit Zähnen (16) versehen ist und ein einheitliches Teil mit dem Ritzel (16) bildet und einen Ring, der mit dazu passenden Zähnen (13) versehen ist und in einer Einheit mit der Ausgangswelle (8) des Untersetzungsgetriebe (4) ausgeformt ist, umfaßt, während des Durchratterns der Rutschkupplung (18) die elastischen Wände (9) des Gehäuses nach außen gebogen werden, um einer jeweiligen axialen Bewegung des Ritzels bzw. der Ausgangswelle zu genügen, und daß weiter, für die Umwandlung einer linearen Bewegung eines flexiblen Zugelements (2), so wie eine Kette oder Schnur, in eine Rotationsbewegung der Eingangswelle (3), ein Mechanismus vorgesehen ist, und das Zugelement (2) mit der äußeren Begrenzungsfläche einer Rolle (1), die mit der Eingangswelle (3) verbunden ist, zusammenpaßt.

2. Mechanismus für die Übertragung einer Rotationsbewegung einer Eingangswelle (3) eines Untersetzungsgetriebes (4) in eine Rotationsbewegung einer Ausgangswelle (8) des Getriebes, wobei die Achse von dieser im rechten Winkel zu der Achse der Eingangswelle (3) angeordnet ist, die Eingangswelle eine Schraubengewindewindung (5) trägt, ein Ritzel (6) des Untersetzungsgetriebes mit dieser Windung, die koaxial von der Ausgangswelle (8) gehalten wird und imstande ist, darauf ihre Rotationsbewegung zu übertragen, zusammenwirkt, alle Elemente des Mechanismus in einem Gehäuse (10) untergebracht werden, das mit zwei parallelen und elastischen Wänden (9), zwischen welchen das Ritzel (6) gehalten wird, versehen ist und die Enden der Eingangswelle (3) des Mechanismus in Lagern (22) gehalten werden, die einen Teil der Verbindungswände (23) des Gehäuses (10) bilden, und der Mechanismus zwischen der Eingangswelle (3) und Ausgangswelle (8) eine Ratterrotationsrutschkupplung (18) enthält, dadurch gekennzeichnet, daß die Ratterrotationsrutschkupplung (18) einen Ring (15), der mit Zähnen (16) versehen ist und ein einheitliches Teil mit dem Ritzel (16) bildet und einen Ring, der mit dazu passenden Zähnen (13) versehen ist und in einer Einheit mit der Ausgangswelle (8) des Untersetzungsgetriebes (4) ausgeformt ist, umfaßt, und in dem zwischen den parallelen Wänden (9) des Gehäuses etwas axiales Spiel für das Ritzel (6) vorhanden ist, um auf der Ausgangswelle (8) bewegt werden zu können, in der ein elastisch eingespanntes Element (17) an der Hohlwelle (8) eingepaßt ist, um dieses Spiel aufzunehmen, und in dem weiter, für die Umwandlung der linearen Bewegung eines flexiblen Zugelements (2), so wie eine Kette oder Schnur, in eine Rotationsbewegung der Eingangswelle (3), ein Mechanismus vorgesehen ist, und das Zugelement (2) mit der äußeren Begrenzungsfläche einer Rolle (1), die mit der Eingangswelle (3) verbunden ist, zusammenpaßt.

3. Mechanismus nach Anspruch 1 oder 2, der auf einen venezianischen Rollo angewandt wird.

## Revendications

1. Mécanisme pour la transmission d'un mouvement rotatif de l'arbre d'entrée (3) d'un réducteur à engrenages (4) à un mouvement rotatif de l'arbre de sortie (8) dudit réducteur, dont l'axe est perpendiculaire à l'axe de l'arbre d'entrée (3), l'arbre d'entrée portant une spire de vis (5), et un pignon (6) du réducteur coopérant avec cette spire et étant coaxialement supporté sur l'arbre de sortie (8) de manière à transmettre son mouvement de rotation à ce dernier, tous les éléments du mécanisme étant logés dans un carter (10) qui comprend deux parois parallèles et élastiques (9) entre lesquelles le pignon (6) est supporté, les extrémités de l'arbre d'entrée (3) du mécanisme étant supportées dans des paliers (22) qui font partie de parois de liaison (23) du carter (10), le mécanisme comprenant un coupleur rotatif à dents glissantes (18) disposé entre les arbres d'entrée (3) et de sortie (8), caractérisé en ce que le coupleur rotatif à dents glissantes (18) comprend un anneau (15) présentant des dents (16) et solidaire du pignon (6) et un anneau présentant des dents complémentaires (13) et solidaires de l'arbre de sortie (8) du réducteur (4) ; en ce que, pendant le glissement des dents du coupleur (18), les parois élastiques (9) du carter fléchissent vers l'extérieur afin de permettre un mouvement axial relatif du pignon et de l'arbre de sortie, respectivement ; et en ce qu'il est prévu en outre un mécanisme pour la conversion d'un mouvement linéaire d'un élément de traction souple (2), tel qu'une chaîne ou un câble, en un mouvement rotatif de l'arbre d'entrée (3), ledit élément de traction (2) coopérant avec la périphérie extérieure d'une poulie (1) accouplée à l'arbre d'entrée (3).

2. Mécanisme pour la transmission d'un mouvement rotatif de l'arbre d' entrée (3) d'un réducteur à engrenages (4) à un mouvement rotatif de l'arbre de sortie (8) dudit réducteur, l'axe de l'arbre de sortie (8) étant perpendiculaire à l'axe de l'arbre d'entrée (3), l'arbre d'entrée portant une spire de vis (5), et un pignon (6) du réducteur coopérant avec cette spire et étant coaxialement supporté sur l'arbre de sortie (8) et pouvant transmettre son mouvement de rotation à ce dernier, tous les éléments du mécanisme étant logés dans un carter (10) qui comprend deux parois parallèles et élastiques (9) entre lesquelles le pignon (6) est supporté, et les extrémités de l'arbre d'entrée (3) du mécanisme étant supportées dans des paliers (22) qui font partie de parois de liaison (23) du carter (10), le mécanisme comprenant un coupleur rotatif à dents glissantes (18) disposé entre les arbres d' entrée (3) et de sortie (8), caractérisé en ce que le coupleur rotatif à dents glissantes (18) comprend un anneau (15) pourvu de dents (16) et solidaire du pignon (6) et un anneau pourvu de dents complémentaires (13) et solidaire de l'arbre de sortie (8) du réducteur (4) ; en ce que , entre les parois parallèles (9) du carter, il est prévu un certain jeu axial permettant au pignon (6) de se déplacer sur l'arbre de sortie (8) ; en ce qu'un élément élastiquement chargé (17) est monté sur l'arbre creux (8) pour rattraper ledit jeu ; et en ce qu'il est prévu en outre un mécanisme pour la conversion d'un mouvement linéaire d'un élément de traction souple (2), tel qu 'une chaîne ou une corde, en un mouvement rotatif de l'arbre d'entrée (3), ledit élément de traction (2) coopérant avec la périphérie extérieure d'une poulie (1) accouplée à l'arbre d'entrée (3).

3. Mécanisme suivant les revendications 1 ou 2, appliqué à un store vénitien.
